# EUROPÄISCHE PATENTSCHRIFT

(11) **EP 2 544 949 B1**
(45) Veröffentlichungstag und Bekanntmachung des Hinweises auf die Patenterteilung: **29.06.2016**
(21) Anmeldenummer: 11705500.4
(22) Anmeldetag: 16.02.2011
(51) Int. Cl.: F16L 37/098, F16L 25/01, F16L 53/00, B64D 11/02

(54) **SCHUTZ VON WASSERLEITUNGEN GEGEN FROST**
PROTECTING WATER PIPES FROM FROST
PROTECTION DE CONDUITES D'EAU CONTRE LE GEL

(30) Priorität: 10.03.2010 US 312391 P; 10.03.2010 DE 102010010929
(43) Veröffentlichungstag der Anmeldung: 16.01.2013
(73) Patentinhaber: Airbus Operations GmbH, 21129 Hamburg (DE)
(72) Erfinder: ROEDERER, Karsten, 21031 Hamburg (DE); LUTZER, Wilhelm, 23619 Zarpen (DE); HOFFJANN, Claus, 21147 Hamburg (DE)
(74) Vertreter: Kopf Westenberger Wachenhausen Patentanwälte PartG mbB
(86) Internationale Anmeldenummer: PCT/EP2011/052266
(87) Internationale Veröffentlichungsnummer: WO 2011/110408

(56) Entgegenhaltungen:
- WO-A1-2004/018924
- DE-U1-202005 004 602
- JP-A- 6 147 390
- JP-A- 8 306 473
- US-A- 4 581 521
- US-A- 5 294 780
- US-A1- 2003 190 162
- US-B1- 6 211 494

## Beschreibung

Die vorliegende Anmeldung beansprucht die Priorität der US Provisional Patentanmeldung Nr. 61/312,391, eingereicht am 10. März 2010 und der deutschen Patentanmeldung Nr. 10 2010 010 929.0, eingereicht am 10. März 2010,

### Gebiet der Erfindung

Die Erfindung betrifft den Frostschutz von Wasserleitungen. Insbesondere betrifft die Erfindung ein selbstheizendes Wasserleitungssegment für ein Luftfahrzeug zum Schutz vor Vereisung des Wasserleitungssegments, ein selbstheizendes Verbindungselement zum mechanischen und elektrischen Verbinden von zwei selbstheizenden Wasserleitungssegmenten, ein selbstheizendes Wasserleitungssystem für ein Luftfahrzeug, ein Luftfahrzeug mit einem selbstheizenden Wasserleitungssystem, sowie ein Verfahren zum Schutz vor Vereisung eines Wasserleitungssystems in einem Luftfahrzeug.

### Technischer Hintergrund

Die Wasserleitungen speziell in Verkehrsflugzeugen neigen in großer Höhe bzw. beim Abstellen des Flugzeugs in kaltem Klima zum Einfrieren. Aus diesem Grund ist es oft erforderlich, diese Wasserleitungen zu beheizen oder zu drainieren.

Für die Beheizung werden in der Regel sogenannte Heizbänder verwendet, welche aus zwei Leitern, einem dazwischen liegenden Halbleiter und einer Isolationsschicht bestehen können und in mehreren Abschnitten parallel zu den Rohrleitungen verlegt werden. Das Verlegen dieser Heizbänder ist oft zeitaufwändig und es ist erforderlich, dass das Verlegen durch geschultes Fachpersonal erfolgt.

DE 197 26 419 A1 und US 6,126,483 beschreiben Heizleiter-Verbindungssysteme in einem Flugzeug.

Dokument US 4,581,521, welches als nächstliegender Stand der Technik angesehen wird, offenbart die Merkmale des Oberbegriffes des Anspruchs 1.

### Zusammenfassung der Erfindung

Es ist eine Aufgabe der Erfindung, einen verbesserten Frostschutz von Wasserleitungen in Luftfahrzeugen anzugeben.

Diese Aufgabe wird durch die Merkmale der unabhängigen Patentansprüche 1 (Produkt) und 13 (Verfahren) gelöst. Weiterbildungen der Erfindung ergeben sich aus den Unteransprüchen.

Die im Folgenden beschriebenen Ausführungsbeispiele betreffen gleichermaßen das selbstheizende Wasserleitungssegment, das selbstheizende Verbindungselement, das selbstheizende Wasserleitungssystem, das Luftfahrzeug und das Verfahren. In anderen Worten lassen die sich im Folgenden beispielweise im Hinblick auf das Wasserleitungssegment beschriebenen Merkmale auch in dem Verbindungselement implementieren, und umgekehrt.

Gemäß einem ersten, nicht beanspruchten Aspekt ist ein selbstheizendes Wasserleitungssegment für ein Luftfahrzeug zum Schutz vor Vereisung des Wasserleitungssegments angegeben. Das Wasserleitungssegment weist ein Innenrohr sowie eine Heizvorrichtung auf. Das Innenrohr dient der Leitung von Wasser und die Heizvorrichtung, welche eine Außenfläche des Wasserleitungssegments umschließt, ist in das Wasserleitungssegment integriert und kann zum Beheizen des Innenrohrs eingesetzt werden.

Ein Verlegen von Heizbändern ist nicht mehr erforderlich. Die verschiedenen Segmente können zu einem komplexen Wasserleitungssystem verbaut werden. Gemäß einem weiteren Aspekt der Erfindung ist ein selbstheizendes Verbindungselement zum mechanischen und elektrischen Verbinden von zwei selbstheizenden Wasserleitungssegmenten, wie sie oben und im Folgenden beschrieben werden, angegeben. Auch kann das Verbindungselement zum mechanischen und/oder elektrischen Verbinden von mehr als zwei selbstheizenden Wasserleitungssegmenten (beispielsweise T-förmig oder Y-förmig) ausgeführt sein. Gemäß einem weiteren Aspekt der Erfindung ist ein selbstheizendes Wasserleitungssystem für ein Luftfahrzeug angegeben, welches mehrere oben und im Folgenden beschriebene selbstheizende Wasserleitungssegmente und mehrere oben und im Folgenden beschriebene Verbindungselemente aufweist. Jeweils eines der Verbindungselemente verbindet hierbei mindestens jeweils zwei Wasserleitungssegmente mechanisch und elektrisch miteinander.

Gemäß einem weiteren Aspekt der Erfindung ist ein Luftfahrzeug mit einem oben und im Folgenden beschriebenen Wasserleitungssystem angegeben.

Gemäß einem weiteren Aspekt der Erfindung ist ein Verfahren zum Schutz vor Vereisung eines Wasserleitungssystems in einem Luftfahrzeug angegeben, bei dem Wasser durch ein Innenrohr eines Wasserleitungssegments und eines erfindungsgemäßen Verbindungselements geleitet wird. Weiterhin erfolgt ein Beheizen des Innenrohrs durch eine Heizvorrichtung, die das Wasserleitungssegment und das Verbindungselement vollständig ummantelt und in das Wasserleitungssegment und das Verbindungselement integriert ist.

Es kann als ein Kernaspekt der Erfindung angesehen werden, dass die wasserführenden Rohrleitungen (also die Kombination aus den Wasserleitungssegmenten und den Verbindungselementen) direkt beheizt werden, da die Heizvorrichtung in der Rohrleitung integriert ist. Hierdurch kann beispielsweise der Wärmeübergang verbessert werden. Weiterhin kann die Heizleistung kontinuierlich in das gesamte Rohrsystem abgegeben werden und die örtlich tatsächlich vorhandene Heizleistung kann direkt überwacht werden. Auf diese Weise kann vermieden werden, dass die abgegebene Heizleistung höher als notwendig ausfällt, wodurch der Energieverbrauch und damit der Treibstoffbedarf des Flugzeugs reduziert werden kann.

Da die wasserführenden Rohrleitungen direkt beheizt werden, kann die Montage vereinfacht werden. Auch kann dies zu einem verbesserten Wärmeübergang und zusätzlicher Gewichtsersparnis führen, da keine zusätzlichen Elemente installiert werden müssen. Im übrigen kann der Wärmeübertrag zwischen der Heizvorrichtung und beispielsweise dem Innenrohr optimiert werden, da die Heizvorrichtung in den Rohrleitungen integriert ist Bei geeigneter Auslegung lassen sich auf diese Weise außerdem Warmwasser- und Kaltwasserkreise realisieren, so dass Durchlauferhitzer oder Boiler eingespart werden können.

Gemäß einer Ausführungsform der Erfindung ist die Heizvorrichtung eine Halbleiterheizvorrichtung (z.B. ein PTC (Positive Temperature Coefficient) Thermistor), die einen Innenleiter, einen Außenleiter und einen dazwischen angeordneten Halbleiter aufweist, wobei der Innenleiter, der Halbleiter und der Außenleiter koaxial zueinander angeordnet sind.

Gemäß einer weiteren Ausführungsform der Erfindung handelt es sich bei dem Innenleiter um das Innenrohr selbst, welches dem Wassertransport dient. Das Außenrohr oder metallische Geflecht dient als AC-Leitung.

Gegebenenfalls weist das Innenrohr eine innere, isolierende Ummantelung auf.

Gemäß einer weiteren Ausführungsform der Erfindung weist das Wasserleitungssegment einen äußeren Isolationsmantel aus Kunststoff auf, der um den Außenleiter angeordnet ist.

An dieser Stelle sei noch einmal darauf hingewiesen, dass die im Folgenden und oben beschriebenen Merkmale natürlich auch in dem Verbindungselement implementiert sein können. So kann das Verbindungselement ebenfalls einen Isolationsmantel aus Kunststoff aufweisen, der sich bei Installation des Systems an den entsprechenden Isolationsmantel des Wasserleitungssegments anschließt.

Gemäß einer weiteren Ausführungsform der Erfindung kann das Wasserleitungssegment zur Montage biegsam ausgeführt sein. Insbesondere können die leitenden Schichten auch aus Geflecht sein, wobei in diesem Fall separate Stromzuführungen vorgesehen sein können.

Weiterhin kann, gemäß einer weiteren Ausführungsform der Erfindung, der Isolationsmantel zum Aushärten nach der Montage des Wasserleitungssegments ausgeführt sein.

Gemäß einer weiteren Ausführungsform der Erfindung weist das selbstheizende Verbindungselement einen ersten konischen Bereich an einer ersten Stirnseite des Verbindungselements auf, wobei der erste konische Bereich zur Bereitstellung einer elektrischen und einer mechanischen Verbindung zu einem ersten Wasserleitungssegment ausgeführt ist, wenn Verbindungselement und Wasserleitungssegment miteinander verbunden werden.

Gemäß einer weiteren Ausführungsform der Erfindung weist das Verbindungselement einen zweiten konischen Bereich an einer zweiten Stirnseite des Verbindungselements auf, wobei die beiden konischen Bereiche zur Bereitstellung der elektrischen und der mechanischen Verbindung der beiden Wasserleitungssegmente ausgeführt sind. Die Wasserleitungssegmente weisen entsprechende konische Bereiche an deren Stirnseiten auf, die zum Anschluss an die konischen Bereiche der Verbindungselemente ausgeführt sind.

Gemäß einer weiteren Ausführungsform der Erfindung weist das Verbindungselement weiterhin eine Heizvorrichtung mit einem Innenleiter, einem Außenleiter und einem dazwischen angeordneten Halbleiter auf, wobei der Innenleiter, der Halbleiter und der Außenleiter koaxial zueinander angeordnet sind.

Bei Montage des Wasserleitungssystems werden die entsprechenden Innenleiter, Halbleiter und Außenleiter der Verbindungselemente und Wasserleitungssegmente aneinander angeschlossen.

Gemäß einer weiteren Ausführungsform der Erfindung weist das Verbindungselement einen ersten elektrischen Anschluss auf, der zum Innenleiter führt. Weiterhin ist ein zweiter elektrischer Anschluss an den Außenleiter vorgesehen, wobei die beiden Anschlüsse zur Verbindung mit einer Steuervorrichtung ausgeführt sind, so dass über die Steuervorrichtung Strom in Innenleiter und Außenleiter eingespeist werden kann.

Das selbstheizende Wasserleitungssystem weist, gemäß einer Ausführungsform der Erfindung, eine Vielzahl an oben und im Folgenden beschriebenen Wasserleitungssegmenten und Verbindungselementen auf, wobei die Heizvorrichtungen die Wasserleitungssegmente und die Verbindungselemente vollständig ummanteln. Insbesondere treten beispielsweise keine Diskontinuitäten an den Verbindungsbereichen zwischen den Wasserleitungssegmenten und den Verbindungselementen auf.

Im Folgenden werden mit Verweis auf die Figuren Ausführungsbeispiele der Erfindung beschrieben.

Kurze Beschreibung der Figuren
Fig. 1 zeigt zwei Ansichten eines selbstheizenden Wasserleitungssegments
Fig. 2 zeigt zwei Ansichten eines selbstheizenden Verbindungselements gemäß einem Ausführungsbeispiel der Erfindung.
Fig. 3 zeigt die Verbindung zwischen einem Wasserleitungssegment und einem Verbindungselement gemäß einem Ausführungsbeispiel der Erfindung, in perspektivischer Darstellung.
Fig. 4 zeigt die Ausführung einer Clip-Verbindung zwischen einem Wasserleitungssegment und einem Verbindungselement gemäß einem Ausführungsbeispiel der Erfindung.
Fig. 5 zeigt ein selbstheizendes Wasserleitungssystem gemäß einem Ausführungsbeispiel der Erfindung.
Fig. 6 zeigt ein Luftfahrzeug gemäß einem Ausführungsbeispiel der Erfindung.
Fig. 7 zeigt ein Flussdiagramm eines Verfahrens gemäß einem Ausführungsbeispiel der Erfindung.

Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

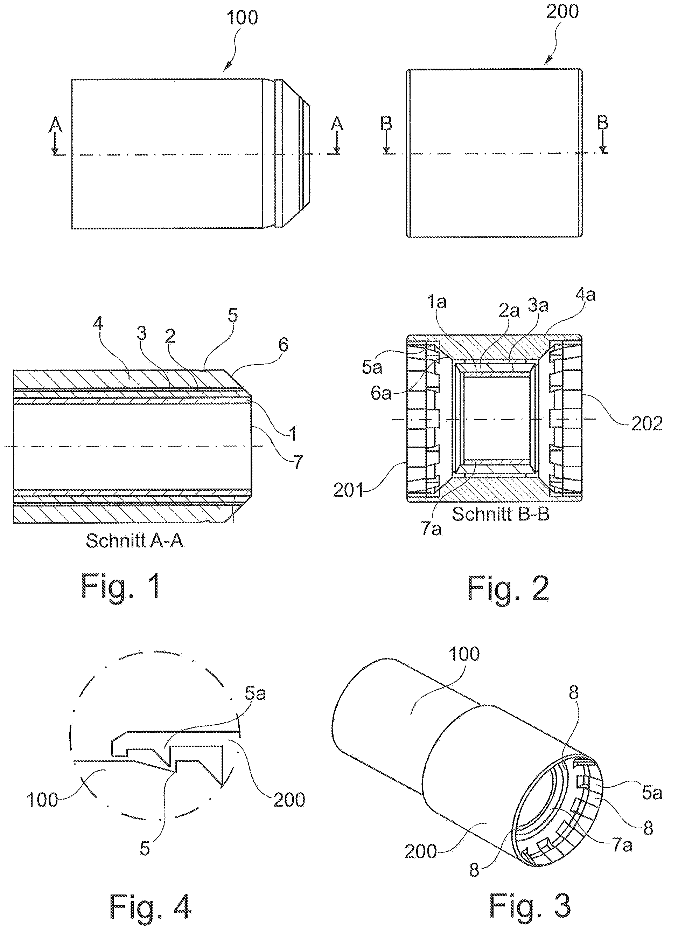

Fig. 1 zeigt ein selbstheizendes Wasserleitungssegment 100 in Seitenansicht sowie als Schnittdarstellung entlang der Ebene A-A.

Fig. 2 zeigt ein selbstheizendes Verbindungselement 200, ebenfalls in Seitenansicht sowie in Schnittdarstellung entlang der Schnittebene B-B.

Die Rohrleitungen (Wasserleitungssegment 100 und Verbindungselement 200) sind koaxial aufgebaut. Sie bestehen (von innen nach außen) aus einem metallischen Innenleiter 1, 1a der gleichzeitig als wasserführende Leitung dienen kann, einer Halbleiterschicht 2, 2a einem metallischen Außenleiter 3, 3a und einer Isolierschicht 4, 4a, z. B. aus einem Kunststoffmaterial.

Weiterhin weist das Wasserleitungselement 100 in der Isolierschicht 4 eine ringförmige Ausnehmung 5 auf (eine sogenannte Clipnut), in welche eine entsprechende Cliplasche 5a des Verbindungselements eingeklickt werden kann, um das Verbindungselement 200 an das Wasserleitungssegment 100 anzuschließen und daran zu befestigen.

Die verschiedenen Schichten 1, 1a, 2, 2a, 3, 3a, 4, 4a sind so ausgewählt und angeordnet und ihre Dicke ist so aufeinander abgestimmt, dass sich das Rohr biegen lässt. Der Kunststoff-Isoliermantel 4 kann beispielsweise aus einem UV-empfindlichen Werkstoff bestehen, der unter UV-Lichteinfluss aushärtet. Im Lieferzustand wird diese Schicht durch eine lichtundurchlässige Folie geschützt. Nach der Verformung des Rohres in seine gewünschte Gestalt wird die Schutzfolie entfernt und das Rohr mittels einer UV-Lampe gehärtet, so dass es formstabil ist.

Die in Frage kommenden Werkstoffe für den wasserführenden Innenleiter 1 können sich nach den einschlägigen Trinkwasserbestimmungen im Sinne der folgenden Regularien und Verordnungen richten: Deutsche Trinkwasserverordnung - TrinkwV 2000; französische Trinkwasserverordnung - Qualité des eaux destinée à la consommation humaine; US-Trinkwasserverordnung Part 141 - National Primary Drinking Water Regulations; EU-Richtlinie 98/83/EG des Rates vom 3. November 1998 über die Qualität von Wasser für den menschlichen Gebrauch; ESA-Richtlinie -PSS-03-402 Issue 1 - Water Quality Standards in Manned Space Vehicles.

Zur Verbindung und zur elektrischen Kontaktierung der Segmente dienen speziell ausgeführte Muffen (in anderen Worten die Verbindungselemente 200), die einen Innenkonus aufweisen. Alternativ können die Muffen einen Außenkonus aufweisen, in welchem Fall dann die entsprechende Stirnfläche des Wasserleitungssegments 100 einen Innenkonus besitzt. Innerhalb dieser Muffen befinden sich O-Ringe 7a zur Abdichtung des Systems gegen Wasseraustritt. Die Muffen 200 haltern die Rohre 100 mittels einer raumschlüssigen Clip-, Schneid- oder Klemmringverbindung.

Die Bezugszeichen 6 bzw. 6a zeigen den Anlagekonus des rohrförmigen Wasserleitungssegments 100 bzw. den entsprechenden Anlagekonus der Muffe 200.

Das Bezugszeichen 7 weist auf die Stirnfläche des Wasserleitungssegments 100 und dort auf den Innenleiter 1, wo sich die Anlagefläche für den O-Ring 7a der Muffe 200 befindet.

Das muffenartige Verbindungssegment 200 kann sowohl an der linken Stirnfläche 201 als auch an seiner rechten Stirnfläche 202 mit einem entsprechenden Wasserleitungssegment 100 verbunden werden.

Die Wasserleitungssegmente 100 können auf jede beliebige Länge zugeschnitten werden. Für die Muffenverbindung werden die Enden der Wasserleitungssegmente in einer Vorrichtung konusförmig angefast. Dieses Anfasen erfolgt beispielsweise durch Fräsen oder Drehen.

Der elektrische Kontakt zwischen den einzelnen Schichten 1, 1a; 2, 2a bzw. 3, 3a wird über eine Verzahnung innerhalb des Muffenkonus 200 ausgeführt, welcher sich beim Zusammenfügen der beiden Bauteile in die angefasten Flächen des Innenleiters und des Außenleiters der Rohre drückt.

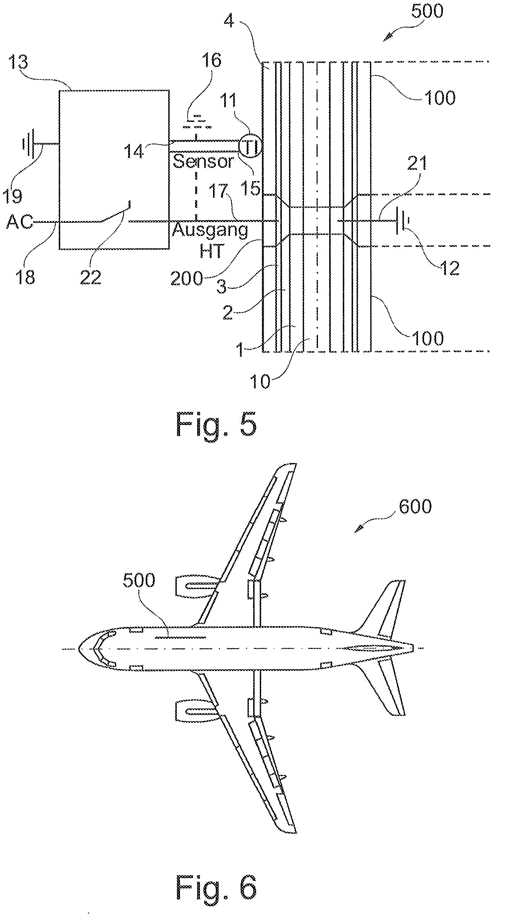

An dieser Stelle ist zu beachten, dass die einzelnen Wasserleitungssegmente durchgängige Schichten 1, 2, 3, 4 aufweisen können. Auch ist es möglich, dass die Heizelementschichten 1, 2, 3 in getrennten Segmenten ausgeführt sind, welche voneinander isoliert sind, eigene elektrische Anschlüsse und unterschiedliche Schichtdicken aufweisen können. Auf diese Weise ist es möglich, verschiedene Rohrsegmente unterschiedlich stark zu heizen, je nach Temperaturprofil. Diese individuelle Beheizung verschiedener Rohrsegmente kann über eine entsprechende Steuereinheit 13 in Verbindung mit Temperatursensoren 11 (siehe Fig. 5) erfolgen.

Fig. 3 zeigt eine Verbindung zwischen einer Muffe 200 und einem Wasserleitungssegment 100 in perspektivischer Darstellung. Insbesondere ist zu erkennen, dass die Muffe (also das Verbindungselement 200) einen etwas größeren Durchmesser aufweist, als das Wasserleitungssegment (Rohr) 100. Auf der Innenfläche der konischen Ausnehmung 6a des Verbindungselements 200 liegen mehrere Cliplaschen 5a, welche in die entsprechende Clipnut 5 des Wasserleitungssegments 100 eingreifen, wenn die beiden Elemente zusammengedrückt werden.

Weiterhin sind mehrere Kontaktflächen (die beim Anfasen entstehen) 8 vorgesehen, welche beim Zusammenfügen von Wasserleitungssegment und Verbindungselement die entsprechende Schicht 1, 2, 3 des Wasserleitungssegments 100 kontaktieren. Diese Kontaktflächen sind mit elektrischen Durchführungen verbunden, welche durch den Körper des Verbindungselements 200 nach außen führen, so dass daran dann eine Regeleinheit bzw. eine Steuereinheit 13 angeschlossen werden kann. Wenn beispielsweise der Aufbau bzw. die Anzahl der Schichten komplex wird, kann die Sensorzuleitung separat geführt sein.

Weiterhin können Ausnehmungen für ein Ausrückwerkzeug vorgesehen sein, mit deren Hilfe das Wasserleitungssegment vom Verbindungselement getrennt werden kann.

Fig. 4 zeigt eine Detaildarstellung der Clip-Verbindung im Querschnitt. Das Wasserleitungssegment 100 weist eine Clipnut 5 auf, in welche eine entsprechende Cliplasche 5a des Verbindungselements 200 eingreift, wenn das Verbindungselement 200 über die Stirnseite des Wasserleitungssegments 100 geschoben wurde.

Fig. 5 zeigt ein Wasserleitungssystem 500, welches mehrere selbstheizende Wasserleitungssegmente 100 aufweist, die über entsprechende Anschlussmuffen bzw. Verbindungselemente 200 miteinander verbunden sind.

Das Verbindungselement 200 weist eine Durchkontaktierung 21 auf, welche den Innenleiter 1 mit einem Masseanschluss 12 verbindet. Weiterhin ist eine Durchkontaktierung 17 vorgesehen, welche den Außenleiter 3 mit der Steuer- bzw. Regeleinheit 13 verbindet. Dann kann auch eine Beschichtung innen entfallen. Eine Leckage würde dann auch immer zu einem Stromfluss innerhalb der Leckage von innen nach außen führen. Die Steuer- bzw. Regeleinheit (z. B. IPCU-ESW) weist einen Schalter 22 auf, der über die Leitung 18 eine Verbindung zwischen dem Innenleiter und einer Wechselstromquelle herstellen kann.

Weiterhin können mehrere Temperatursensoren 11 vorgesehen sein, welche die Temperatur in der wasserführenden Leitung 10 und/oder die Temperatur einer der Schichten 1, 2, 3, 4 messen können. Hierfür ist einer der Temperatursensoren über die Leitungen 14, 15 an die Steuer- bzw. Regelungsvorrichtung 13 angeschlossen. Auch kann ein Masseanschluss 16 vorgesehen sein, der mit der Leitung 14, oder Leitung 15 verbunden werden kann.

Über die Leitung 19 kann die Steuer- bzw. Regelungseinheit 13 ebenfalls an die Masse angeschlossen sein.

Auf diese Weise ist es möglich, eine durchgängig beheizte Rohrleitung bereitzustellen.

Fig. 6 zeigt ein Luftfahrzeug 600, in welches ein selbstheizendes Wasserleitungssystem 500 eingebaut ist. Das selbstheizende Wasserleitungssystem 500 kann sich im Rumpf und/oder in den Tragflächen und/oder im Leitwerk des Luftfahrzeugs 600 befinden.

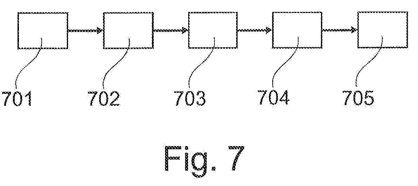

Fig. 7 zeigt ein Flussdiagramm eines Verfahrens gemäß einem Ausführungsbeispiel der Erfindung. Es ist ein Heizelement vorgesehen, welches einen Innenleiter, ein Halbleitermaterial und einen Außenleiter aufweist, welche das Rohr koaxial umschließen. Der Innenleiter kann gleichzeitig das wasserführende Element sein. Bevor das Wasserleitungssystem in Betrieb genommen wird, kann es, wenn es biegeweich ausgeführt ist, im Flugzeug eingepasst und entsprechend gebogen werden. Nach der Formgebung kann es biegesteif gemacht werden, beispielsweise mittels UV-Aushärtung, Aushärtung durch Wärme oder mittels einer induktiven Aushärtung des vorher weichen Isolationsmantels.

Bei der biegeweichen Ausführung kann die Snapverbindung vor dem Biegen gehärtet werden oder aus anderem Material bestehen, welches biegesteifer ist.

Nach dem Aushärten des Kunststoff-Isolationsmantels erhält das Rohr seine maximale Druckfestigkeit. Durch das Zusammenstecken der Wasserleitungssegmente und der Verbindungselemente erfolgt sowohl eine mechanische als auch eine elektrische Kontaktierung des Rohres bzw. der einzelnen Schichten der Wasserleitungssegmente. Bestimmte Verbindungselemente des Wasserleitungssystems können Kontakte zum Anschluss an das elektrische System des Wasserleitungssystems aufweisen.

Nicht alle Verbindungselemente weisen unter Umständen zwei konisch geformte Stirnseiten auf. Beispielsweise ist es möglich, dass ein Verbindungselement nur eine konisch geformte Stirnseite aufweist und auf der anderen Stirnseite ein anderweitiges Verbindungssystem, z. B. eine Verschraubung eingesetzt wird, um das Verbindungselement mit dem entsprechenden Wasserleitungssegment zu verbinden.

Weiterhin können die Verbindungselemente als T-Stück, Kreuzstück oder Y-Stück ausgeführt sein, um Verästelungen im Wasserleitungssystem bereitzustellen. Insbesondere kann die äußere Oberfläche der Rohrleitung glatt oder gewellt sein. Die Segmente können mit den Verbindungselementen mittels einer formschlüssigen Clip-, Schneid- oder Klemmringverbindung verbunden werden und diese Verbindung kann druckstabil im Bereich des geforderten Nenndrucks sein. Insbesondere kann diese Verbindung lösbar ausgeführt sein. Die Verbindung kann insbesondere auch gegen versehentliches Lösen gesichert sein.

Die Heizleistung des Wasserleitungssystems kann über eine entsprechende Regel-oder Steuereinheit 13 (siehe Fig. 5) geregelt oder gesteuert werden. Es können Temperaturfühler 11 vorgesehen sein, die die Wassertemperatur und/oder die Temperatur einer der Schichten kontinuierlich messen. Die Temperaturregelung kann automatisch als Frostschutz arbeiten oder mittels Temperaturvorwahl die Wassertemperatur auf einen bestimmten vorgegebenen Wert einstellen. Als Temperatursensor kann das Heizmedium selbst verwendet werden, falls zum Beispiel dessen Widerstand (oder andere physikalischen Eigenschaften) eine entsprechende Temperaturabhängigkeit aufweisen.

Zunächst einmal wird in Schritt 701 Wasser durch ein Innenrohr eines Wasserleitungssegments und eines Verbindungselements geleitet. In Schritt 702 werden nun die Wassertemperaturen in bestimmten Wasserleitungssegmenten und/oder Verbindungselementen des Wasserleitungssystems gemessen. Die Messwerte werden dann in Schritt 703 an eine Steuereinheit/Regeleinheit 13 übergeben. Diese Einheit 13 wertet die verschiedenen gemessenen Temperaturen aus und stellt sicher, dass jedes Segment entsprechend beheizt wird, so dass eine gewünschte Solltemperatur erreicht wird. Dies erfolgt in Schritt 705.

Im Übrigen sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzuschen.

### Bezugszeichenliste

- 1: Innenteiterrohr
- 1a: Innenleitermuffe
- 2: Halbleiterrohr
- 2a: Halbleitermuffe
- 3: Außenleiterrohr
- 3a: Außenleitermuffe
- 4: Isolierung Rohr
- 4a: Isolierung Muffe
- 5: Clipnut Rohr
- 5a: Cliplasche Muffe
- 6: Anlagekonus Rohr
- 6a: Anlagekonus Muffe
- 7: Anlagefläche O-Ring
- 7a: O-Ring
- 8: Kantaktspitze
- 100: Wasserleitungssegment
- 200: Verbindungselement
- 10: wasserführende Leitung
- 11: Temperatursensor
- 12: Masse
- 13: Regel- oder Steuereinheit
- 14: erste Leitung Temperatursensor
- 15: zweite Leitung Temperatursensor
- 16: Masse
- 17: Anschluss Innenleiter
- 18: AC-Anschluss für die Regel- oder Steuereinheit
- 19: Masse
- 20: Anschluss Außenleiter
- 21: Durchkontaktierung
- 22: Schalter

## Patentansprüche

1. Selbstheizendes Verbindungselement (200) zum mechanischen und elektrischen Verbinden von zwei selbstheizenden Wasserleitungssegmenten (100) für ein Luftfahrzeug zum Schutz vor Vereisung des Wasserleitungssegments, die beiden Wasserleitungssegmente aufweisend: ein Innenrohr zur Leitung von Wasser; eine Heizvorrichtung, die eine Außenfläche des Wasserleitungssegments umschließt; wobei die Heizvorrichtung in das Wasserleitungssegment integriert ist, das Verbindungselement aufweisend eine Heizvorrichtung mit einem Innenleiter (1a), einem Außenleiter (3a) und einem dazwischen angeordneten Halbleiter (2a); **dadurch gekennzeichnet, dass** der Innenleiter (1a), der Halbleiter (2a) und der Außenleiter (3a) koaxial zueinander angeordnet sind;

2. Selbstheizendes Verbindungselement (200)nach Anspruch 1,
wobei die Heizvorrichtung (1, 2, 3) beider Wasserleitungssegmente eine Halbleiterheizvorrichtung ist, die einen Innenleiter (1), einen Außenleiter (3) und einen dazwischen angeordneten Halbleiter (2) aufweist;
wobei der Innenleiter (1), der Halbleiter (2) und der Außenleiter (3) koaxial zueinander angeordnet sind.

3. Selbstheizendes Verbindungselement (200)nach Anspruch 2,
wobei der Innenleiter (1) jedes der Wasserleitungssegmente das Innenrohr (1) ist.

4. Selbstheizendes Verbindungselement (200)nach Anspruch 2 oder 3, beide Wasserleitungssegmente weiterhin aufweisend:
einen Isolationsmantel (4) aus Kunststoff, der um den Außenleiter (3) angeordnet ist.

5. Selbstheizendes Verbindungselement (200)nach einem der vorhergehenden Ansprüche,
wobei beide Wasserleitungssegmente (100) und das Verbindungselement zur Montage biegsam ausgeführt sind; und
wobei die leitenden Schichten des Verbindungselements jeweils aus einem Geflecht bestehen.

6. Selbstheizendes Verbindungselement (200)nach einem der Ansprüche 4 oder 5,
wobei der Isolationsmantel (4) zum Aushärten nach der Montage des Wasserleitungssegments (100) ausgeführt ist.

7. Selbstheizendes Verbindungselement (200) nach einem der vorhergehenden Ansprüche, aufweisend:
einen ersten konischen Bereich (201) an einer ersten Stirnseite des Verbindungselements (200);
wobei der erste konische Bereiche (201) zur Bereitstellung einer elektrischen und einer mechanischen Verbindung zu einem ersten Wasserleitungssegment (100) ausgeführt ist.

8. Selbstheizendes Verbindungselement (200) nach Anspruch 7, weiterhin aufweisend:
einen zweiten konischen Bereich (202) an einer zweiten Stirnseite des Verbindungselements (200),
wobei die beiden konischen Bereiche (201, 202) zur Bereitstellung der elektrischen und der mechanischen Verbindung der beiden Wasserleitungssegmente (100) ausgeführt sind.

9. Selbstheizendes Verbindungselement (200) nach einem der vorhergehenden Ansprüche, weiterhin aufweisend:
einen ersten elektrischen Anschluss (17) an den Innenleiter (1a);
einen zweiten elektrischen Anschluss (21) an den Außenleiter (3 a);
wobei die beiden Anschlüsse zur Verbindung mit einer Steuervorrichtung (11, 13) ausgeführt sind.

10. Selbstheizendes Wasserleitungssystem (500) für ein Luftfahrzeug, das Wasserleitungssystem (500) aufweisend:
eine Vielzahl an selbstheizenden Wasserleitungssegmenten (100) mit jeweils:
einem Innenrohr (1) zur Leitung von Wasser;
einer Heizvorrichtung (1, 2, 3), die eine Außenfläche des Wasserleitungssegments (100) umschließt;
wobei die Heizvorrichtung (1, 2, 3) in das Wasserleitungssegment (100) integriert ist;
eine Vielzahl an Verbindungselementen (200) nach einem der Ansprüche 1 bis 9;
wobei jeweils eines der Verbindungselemente (200) mindestens jeweils zwei Wasserleitungssegmente (100) mechanisch und elektrisch miteinander verbindet.

11. Selbstheizendes Wasserleitungssystem (500) nach Anspruch 10,
wobei die Heizvorrichtungen (1, 2, 3, 1a, 2a, 3a) die Wasserleitungssegmente (100) und die Verbindungselemente (200) vollständig ummanteln.

12. Luftfahrzeug (600) mit einem Wasserleitungssystem (500) nach Anspruch 10 oder 11.

13. Verfahren zum Schutz vor Vereisung eines Wasserleitungssystems in einem Luftfahrzeug gemäß Anspruch 12, das Verfahren aufweisend die Schritte:
Leiten von Wasser durch ein Innenrohr (1, 1a) eines Wasserleitungssegments (100) und eines Verbindungselements (200);
Beheizen des Innenrohrs (1, 1a) durch eine Heizvorrichtung (1, 2, 3, 1a, 2a, 3a);
wobei die Heizvorrichtung (1, 2, 3, 1a, 2a, 3a) das Wasserleitungssegment (100) und das Verbindungselement (200) vollständig ummantelt;
wobei die Heizvorrichtung (1, 2, 3, 1a, 2a, 3a) in das Wasserleitungssegment (100) und das Verbindungselement (200) integriert ist.

## Claims

1. Self-heating connection element (200) for mechanical and electrical connection of two self-heating water pipe segments (100) for an aircraft to protect the water pipe segment against freezing, the two water pipe segments comprising:
an inner tube for supplying water;
a heater device, which surrounds an outer area of the water pipe segment (100); a
wherein the heater is integrated in the water pipe segment, the connection element comprising a heating device with an inner conductor (1a), an outer conductor (3a) and a there between interposed semiconductor (2a);
**characterized in that**, that the inner conductor (1a), the semiconductor (2a) and the outer conductor (3a) are arranged coaxially to each other.

2. Self-heating connection element (200) according to claim 1, wherein the heating device (1, 2, 3) of both water pipe segments is a semiconductor heating device, comprising an inner conductor (1), an outer conductor (3) and a there between interposed semiconductor (2);
wherein the inner conductor (1), the semiconductor (2) and the outer conductor (3) are arranged coaxially to each other.

3. Self-heating connection element (200) according to claim 2, wherein the inner conductor (1) of each water pipe segments is the inner tube (1).

4. Self-heating connection element (200) according to claim 2 or 3, both water pipe segments further comprising: an insulating sheath (4) of plastic, which is arranged at the outer conductor (3).

5. Self-heating connection element (200) according to one of the preceding claims,
wherein both water pipe segments (100) and the connection element are made pliable for mounting; and
wherein the conductive layers of the connection element each consist of a braid.

6. Self-heating connection element (200) according to any one of claims 4 or 5,
wherein the insulating sheath (4) is designed for curing after assembly of the water pipe segment (100).

7. Self-heating connection element (200) according to one of the preceding claims, comprising: a first conical area (201) at a first end face of the connection element (200);
wherein the first conical area (201) is made for providing an electrical and a mechanical connection for a first water pipe segment (100).

8. Self-heating connection element (200) according to claim 7, further comprising:
a second conical area (202) on a second front edge of the connection element (200),
wherein both conical areas (201, 202) are arranged to provide the electrical and mechanical connection of the two water pipe segments (100).

9. Self-heating connection element (200) according to one of the preceding claims, further comprising:
a first electrical connection (17) to the inner conductor (1a);
a second electrical connection (21) to the outer conductor (3a);
wherein the two connections are designed for connection with a control device (11, 13).

10. Self-heating water supply system (500) for an aircraft, the Water supply system (500) comprising:
a plurality of self-heating water pipe segments (100) each having:
an inner tube (1) for conducting water;
a heating device (1, 2, 3), which surrounds an outer area of the water pipe a segment (100);
wherein the heating device (1, 2, 3) is integrated in the water pipe segment a (100);
a plurality of fasteners (200) according to one of preceding claims 1 to 9; wherein each of the connection elements (200) interconnects at least two water pipe segments (100) mechanically and electrically.

11. Self-heating water supply system (500) according to claim 10, wherein the heating devices (1, 2, 3, 1a, 2a, 3a) are completely sheathing the water pipe segments.

12. Aircraft (600) with a water supply system (500) according to claim 10 or 11.

13. A method for protecting a water supply system against freezing in an aircraft according to claims 12, the method comprising the steps of:
Passing water through an inner tube (1, 1a) of a water pipe segment (100) and a connection element (200);
Heating of the inner tube (1, 1a) by a heating device (1, 2, 3, 1a, 2a, 3a);
wherein the heating device (1, 2, 3, 1a, 2a, 3a) of the water pipe segment (100) and the connection element (200) are completely sheathed;
wherein the heating device (1, 2, 3, 1a, 2a, 3a) is integrated in the water pipe segment (100) and the connection element (200).

## Revendications

1. Élément de liaison autochauffant (200) destiné à relier mécaniquement et électriquement deux segments de conduites d'eau autochauffants (100) pour un aéronef, destiné à protéger du givrage le segment de conduite d'eau, les deux segments de conduite d'eau comportant :
un tube intérieur destiné à canaliser de l'eau ; un dispositif chauffant, qui entoure une surface extérieure du segment de conduite d'eau ; le dispositif chauffant étant intégré dans la conduite d'eau, l'élément de liaison présentant un dispositif chauffant doté d'un conducteur intérieur (1a), d'un conducteur extérieur (3a), et d'un semi-conducteur (2a) disposé entre eux ;
**caractérisé en ce que**
le conducteur intérieur (1a), le semi-conducteur (2a) et le conducteur extérieur (3a) sont disposés de manière coaxiale les uns par rapport aux autres.

2. Élément de liaison autochauffant (200) selon la revendication 1,
dans lequel le dispositif chauffant (1, 2, 3) des deux segments de conduite d'eau est un dispositif chauffant à semi-conducteur, qui comporte un conducteur intérieur (1), un conducteur extérieur (3) et un semi-conducteur (2) disposé entre eux ;
dans lequel le conducteur intérieur (1), le semi-conducteur (2) et le conducteur extérieur (3) sont disposés de manière coaxiale les uns par rapport aux autres.

3. Élément de liaison autochauffant (200) selon la revendication 2,
dans lequel le conducteur intérieur (1) de chacun des segments de conduite d'eau est le tube intérieur (1).

4. Élément de liaison autochauffant (200) selon la revendication 2 ou 3, les deux segments de conduite d'eau comportant en outre :
une enveloppe d'isolation (4) en matière plastique, qui est disposée autour du conducteur extérieur (3).

5. Élément de liaison autochauffant (200) selon l'une des revendications précédentes,
dans lequel les deux segments de conduite d'eau (100) et l'élément de liaison sont conçus flexibles pour le montage ; et
dans lequel les couches conductrices de l'élément de liaison sont constituées respectivement d'un tressage.

6. Élément de liaison autochauffant (200) selon l'une des revendications 4 ou 5,
dans lequel l'enveloppe d'isolation (4) est réalisée pour durcir après le montage du segment de conduite d'eau (100).

7. Élément de liaison autochauffant (200) selon l'une des revendications précédentes, présentant :
une première zone conique (201) sur une première face frontale de l'élément de liaison (200) ;
dans lequel la première zone conique (201) est réalisée pour fournir une liaison électrique et mécanique avec un premier segment de conduite d'eau (100).

8. Élément de liaison autochauffant (200) selon la revendication 7, présentant en outre :
une seconde zone conique (202) sur une seconde face frontale de l'élément de liaison (200) ;
dans lequel les deux zones coniques (201, 202) sont réalisées pour fournir une liaison électrique et mécanique des deux segments de conduite d'eau (100).

9. Élément de liaison autochauffant (200) selon l'une des revendications précédentes, présentant en outre :
un premier raccordement électrique (17) au conducteur intérieur (1a) ;
un second raccordement électrique (21) au conducteur extérieur (3a) ;
les deux raccordements étant réalisées pour la liaison avec un dispositif de commande (11, 13).

10. Système de conduite d'eau autochauffant (500) destiné à un aéronef, le système de conduite d'eau (500) présentant :
une pluralité de segments de conduite d'eau (100) autochauffants comportant chacun :
un tube intérieur (1) destiné à canaliser de l'eau ;
un dispositif chauffant (1, 2, 3), qui entoure une surface extérieure du segment de conduite d'eau (100) ;
le dispositif chauffant (1, 2, 3) étant intégré dans le segment de conduite d'eau (100) ;
une pluralité d'éléments de liaison (200) selon l'une des revendications 1 à 9 ;
chaque élément de liaison (200) reliant au moins respectivement deux segments de conduite d'eau (100) l'un à l'autre de manière mécanique et électrique.

11. Système de conduite d'eau autochauffant (500) selon la revendication 10,
dans lequel les dispositifs chauffants (1, 2, 3, 1a, 2a, 3a) enveloppent entièrement les segments de conduite d'eau (100) et les éléments de liaison (200).

12. Aéronef (600) comportant un système de conduite d'eau (500) selon la revendication 10 ou 11.

13. Procédé de protection contre le givrage d'un système de conduite d'eau dans un aéronef selon la revendication 12, le procédé comportant les étapes consistant à :
canaliser de l'eau à travers un tube intérieur (1, 1a) d'un segment de conduite d'eau (100) et d'un élément de liaison (200) ;
chauffer le tube intérieur (1, 1a) au moyen d'un dispositif chauffant (1, 2, 3, 1a, 2a, 3a) ;
dans lequel le dispositif chauffant (1, 2, 3, 1a, 2a, 3a) enveloppe entièrement le segment de conduite d'eau (100) et l'élément de liaison (200).
dans lequel le dispositif chauffant (1, 2, 3, 1a, 2a, 3a) est intégré dans le segment de conduite d'eau (100) et l'élément de liaison (200).
